# FASCICULE DE BREVET EUROPEEN

(11) **EP 3 554 924 B1**
(45) Date de publication et mention de la délivrance du brevet: **24.02.2021**
(21) Numéro de dépôt: 17808971.0
(22) Date de dépôt: 13.11.2017
(51) Int. Cl.: B62D 21/15, B62D 25/08, B62D 25/20

(54) **STRUCTURE ARRIÈRE DE VÉHICULE AUTOMOBILE COMPRENANT UN RENFORT POUR LES COLLISIONS À L'ARRIÈRE**
HECKSTRUKTUR EINES KRAFTFAHRZEUGS MIT EINER VERSTÄRKUNG FÜR HECKKOLLISIONEN
REAR STRUCTURE OF MOTOR VEHICLE COMPRISING A REINFORCEMENT FOR REAR-END COLLISIONS

(30) Priorité: 16.12.2016 FR 1662688
(43) Date de publication de la demande: 23.10.2019
(73) Titulaire: PSA Automobiles SA, 78300 Poissy (FR)
(72) Inventeur: PERU, Marc, 92290 Chatenay- Malabry (FR)
(86) Numéro de dépôt international: PCT/FR2017/053097
(87) Numéro de publication internationale: WO 2018/109293

(56) Documents cités:
- DE-A1-102010 019 992
- DE-A1-102013 009 761
- FR-A1- 2 914 616
- GB-A- 2 306 922
- US-A1- 2007 138 837
- US-A1- 2013 026 786

## Description

L'invention a trait au domaine des véhicules automobiles, plus particulièrement à la structure arrière de véhicules automobiles.

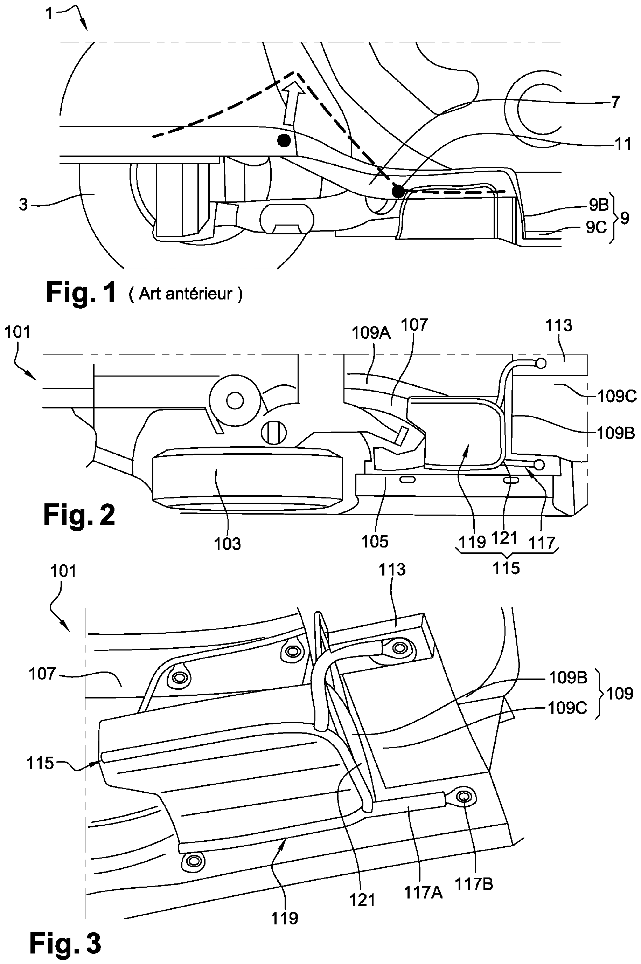

La figure 1 est une vue latérale et intérieure d'une structure arrière d'un véhicule automobile 1 selon l'art antérieur. Cette structure comprend un plancher 9 qui forme un ressaut 9B par rapport à une zone avant 9C dudit plancher 9. Deux profilés structurels arrière 7 couramment appelé longeronnets s'étendent longitudinalement et vers l'arrière à partir du ressaut du plancher 9B et sont positionnés à l'intérieur des roues arrière 3. De nouveaux protocoles de choc arrière décalé concernant des collisions sur 70% de la partie arrière du véhicule sont actuellement mis en place. Ce type de choc montre une tendance du profilé structurel arrière 7 à se verticaliser (représenté schématiquement par les traits interrompus), entraînant l'apparition de deux rotules 11. Ces rotules 11 correspondent à des fractures du profilé structurel arrière 7, elles conduisent à une diminution de l'absorption des chocs par ledit profilé 7. Afin de renforcer la structure du véhicule lors d'un choc arrière, il est envisageable de modifier la structure du châssis, ce qui se traduit alors par de lourds investissements.

Le document de brevet publié US 7,213,873 B2 décrit une structure avant de véhicule automobile comprenant deux dispositifs absorbeurs de chocs à l'avant du véhicule et un renforcement unifiant les deux absorbeurs et positionné à l'arrière du pare-chocs. Ce renforcement va améliorer l'absorption d'énergie par les dispositifs absorbeurs de chocs.

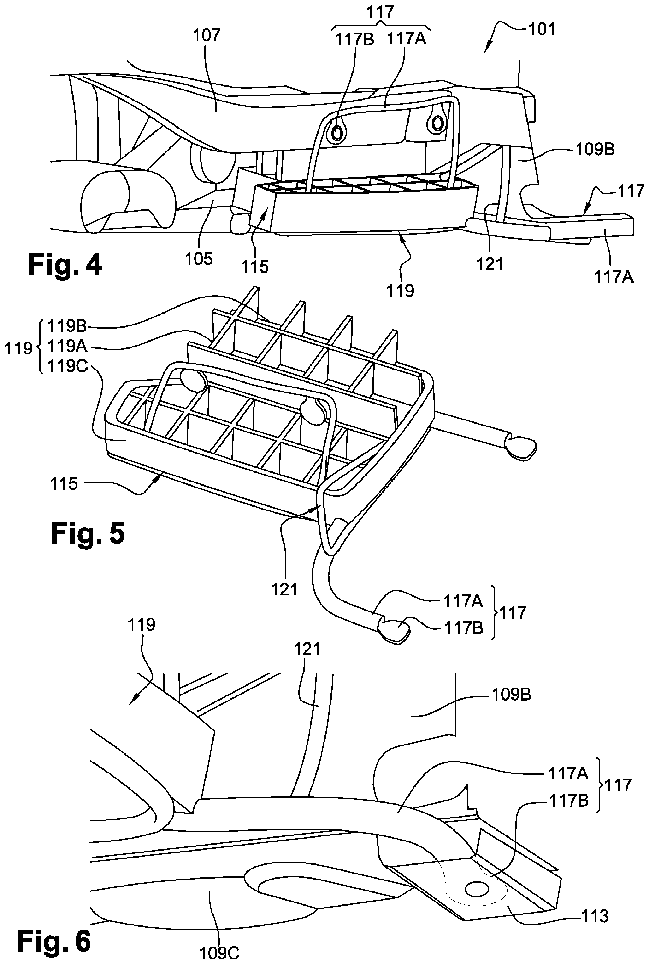

Le document de brevet publié US 2007/0132223 A1 divulgue deux dispositifs absorbeurs de chocs qui sont positionnés à la suite des deux longerons, eux-mêmes positionnés latéralement au plancher. Ce document décrit également un dispositif absorbeur de chocs supplémentaire appelé « crash box » qui est retrouvé entre le premier dispositif absorbeur de chocs et les longerons. Ces structures n'ont en revanche aucun effet sur la verticalisation du profilé structurel arrière, il améliore l'absorption des chocs. Le document FR2914616 divulgue (Les chiffres entre parenthèses font référence à ce document) une structure arrière d'un véhicule automobile (Fig.1), ladite structure comprenant :- un plancher (Fig.1 pos.5,2,6) avec une zone arrière (idem.) destinée à recevoir une banquette arrière, ladite zone étant surélevée en formant un ressaut (Fig.3) par rapport à une zone dudit plancher adjacente à l'avant ;- deux profilés structurels arrière (Fig.1 pos.3,12) s'étendant longitudinalement vers l'arrière sous la zone arrière du plancher depuis le ressaut (Fig.1,4).

L'invention a pour objectif de pallier au moins un des inconvénients de l'état de la technique susmentionné. Plus particulièrement, l'invention a pour objectif de rendre la structure arrière d'un véhicule automobile davantage apte à absorber un choc arrière, notamment le choc arrière décalé avec recouvrement à 70%, et de limiter la verticalisation du profilé structurel arrière.

L'invention a pour objet une structure arrière d'un véhicule automobile, ladite structure comprenant : un plancher avec une zone arrière destinée à recevoir une banquette arrière, ladite zone étant surélevée en formant un ressaut par rapport à une zone dudit plancher adjacente à l'avant ; deux profilés structurels arrière s'étendant longitudinalement vers l'arrière sous la zone arrière du plancher depuis le ressaut ; remarquable en ce que la structure comprend, en outre : deux renforts sur les deux profilés structurels, respectivement ; chacun desdits renforts étant fixé au profilé correspondant et au plancher, au niveau du ressaut, et configuré de manière à limiter une tendance dudit profilé à pivoter verticalement vers le haut en cas de choc à l'arrière.

Le ressaut est une portion du plancher orientée généralement verticalement et couramment désignée « plancher à talon ».

Selon un mode avantageux de l'invention, chacun des renforts comprend une portion arrière s'étendant longitudinalement sous le profilé correspondant et une portion avant s'étendant sous la zone adjacente du plancher.

Selon un mode avantageux de l'invention, pour chacun des renforts, la portion avant comprend des pattes s'étendant longitudinalement depuis la portion arrière ; lesdites pattes comprenant, chacune, au moins un œillet de fixation notamment par vis.

Selon un mode avantageux de l'invention, au moins une des pattes de chacun des renforts est fixé à un profilé longitudinal s'étendant sous le plancher.

Selon un mode avantageux de l'invention, pour chacun des renforts, la portion arrière s'étend verticalement le long d'une face latérale du profilé correspondant et est fixée à ladite face.

Selon un mode avantageux de l'invention, chacun des renforts comprend une portion intermédiaire, située entre les portions arrière et avant, s'étendant verticalement le long du ressaut de manière à pouvoir prendre appui sur ledit ressaut en cas de pivotement vertical du profilé correspondant lors du choc à l'arrière.

Cette portion intermédiaire peut être consolidée par des renforcements tubulaires supplémentaires.

Selon un mode avantageux de l'invention, pour chacun des renforts, la portion arrière comprend à un bord latéral extérieur, à une position arrière, au moins un œillet de fixation par vis à un longeron structurel latéral du plancher.

Selon un mode avantageux de l'invention, pour chacun des renforts, la portion arrière comprend des parois verticales formant des cavités en contact avec le profilé correspondant et apte à se déformer en compression lors du pivotement vertical dudit profilé lors du choc à l'arrière.

Les parois verticales ont préférentiellement une épaisseur comprise entre 1 et 3mm.

Selon un mode avantageux de l'invention, chacun des renforts comprend une structure tubulaire métallique s'étendant sur les portions avant et arrière ; les cavités déformables, le cas échéant, étant rapportées sur ladite structure.

Cette structure tubulaire métallique peut servir à fixer le renfort sur la structure arrière du véhicule, en particulier sur le longeron structurel latéral, sur le profilé longitudinal et le profilé structurel arrière. Dans ce cas, les cavités déformables sont préférentiellement fabriquées en matériau composite, tel que le BMC (acronyme de « Bulk Molding Compound »), et/ou en matériau SMC (acronyme de « Sheet Molding Compound »). La structure tubulaire est préférentiellement en acier, et d'un diamètre compris entre 30 et 45 mm, avec une épaisseur comprise entre 2 et 3,5mm.

Selon un mode avantageux de l'invention, chacun des renforts est une pièce métallique de fonderie formant les portions avant ; arrière ; intermédiaire, le cas échéant ; et les cavités déformables, le cas échéant. Dans ce cas, la pièce métallique peut être réalisée en aluminium. Elle peut également présenter des renforcements supplémentaires notamment sur les bords latéraux externe et interne de la portion arrière. L'épaisseur des parois verticales est préférentiellement comprise entre 2 et 4 mm, et l'épaisseur de la portion arrière est comprise entre 4 et 6mm.

Les mesures de l'invention sont intéressantes en ce qu'elles permettent de réaliser un renforcement la structure arrière d'un véhicule sans augmentation de poids substantielle. Enfin, elle empêche la verticalisation des profilés structurels arrière.

D'autres caractéristiques et avantages de la présente invention seront mieux compris à l'aide de la description et des dessins parmi lesquels :
- La figure 1 est une coupe latérale d'un véhicule automobile selon l'art antérieur et qui a été décrite précédemment ;
- La figure 2 est une vue de dessous de la structure d'un véhicule automobile, selon un premier mode de réalisation de l'invention ;
- La figure 3 est une vue de 3/4 et du dessous de la structure de la figure 2 ;
- La figure 4 est une vue latérale de la structure des figures 2 et 3 ;
- La figure 5 est une vue en perspective du renfort des figures 2 à 4 ;
- La figure 6 est une vue de dessous de la structure des figures 2 à 5 ;
- La figure 7 est une vue du dessous de la structure d'un véhicule automobile selon un deuxième mode de réalisation de l'invention ;
- La figure 8 est une vue de ¾ arrière de la structure de la figure 7 ;
- La figure 9 représente le renfort de la structure des figures 7 et 8.

Sur les figures 2 à 6 sont représentés une structure arrière d'un véhicule automobile 101 selon un premier mode de réalisation de l'invention.

Cette structure 101 comprend un plancher 109, lui-même constitué par une zone arrière 109A et une zone avant 109C, la zone arrière 109A étant surélevée par rapport à la zone avant 109C et formant un ressaut 109B par rapport à ladite zone avant 109C. Cette structure 101 comprend également un longeron structurel latéral 105, couramment appelé bas de caisse, s'étendant latéralement à partir du plancher 109 du véhicule, et un profilé structurel arrière 107, couramment appelé longeronnet, s'étendant longitudinalement et vers l'arrière à partir du ressaut du plancher 109B. Un renfort 115 est fixé sur le profilé structurel arrière 107 et sur le plancher 109. Ce renfort 115 est divisé en trois portions : une portion avant 117, une portion arrière 119 et une portion intermédiaire 121. La portion arrière 119 du renfort 115 s'étend longitudinalement à partir du ressaut du plancher 109B vers l'arrière. En l'occurrence, elle comprend des parois verticales formant des cavités 119A assurant une fonction d'absorption de déformation en compression, du type « crashbox ». Les cavités 119A sont supportées par une structure tubulaire métallique du renfort, elle-même fixée à la structure arrière du véhicule 101. Un bord latéral extérieur 119B est positionné le long du longeron structurel latéral 105, et un bord latéral intérieur 119C est positionné le long et à distance du profilé structurel arrière 107. La structure tubulaire forme la portion intermédiaire 121 qui s'étend à l'avant de la portion arrière 119 du renfort 115 et verticalement le long du ressaut 109B. Enfin, la structure tubulaire forme la portion avant 117 du renfort 115. De la portion arrière 119 partent deux pattes 117A, qui vont se fixer sur deux profilés longitudinaux 113 positionnés sous le plancher 109. La fixation se fait grâce à des œillets de fixation 117B, et préférentiellement par des vis. La fixation à l'avant sur ces profilés peut se faire soit sur les profilés 113 (comme montré en figure 2 et 3), ou dans les profilés longitudinaux 113 (comme montré en figure 6).

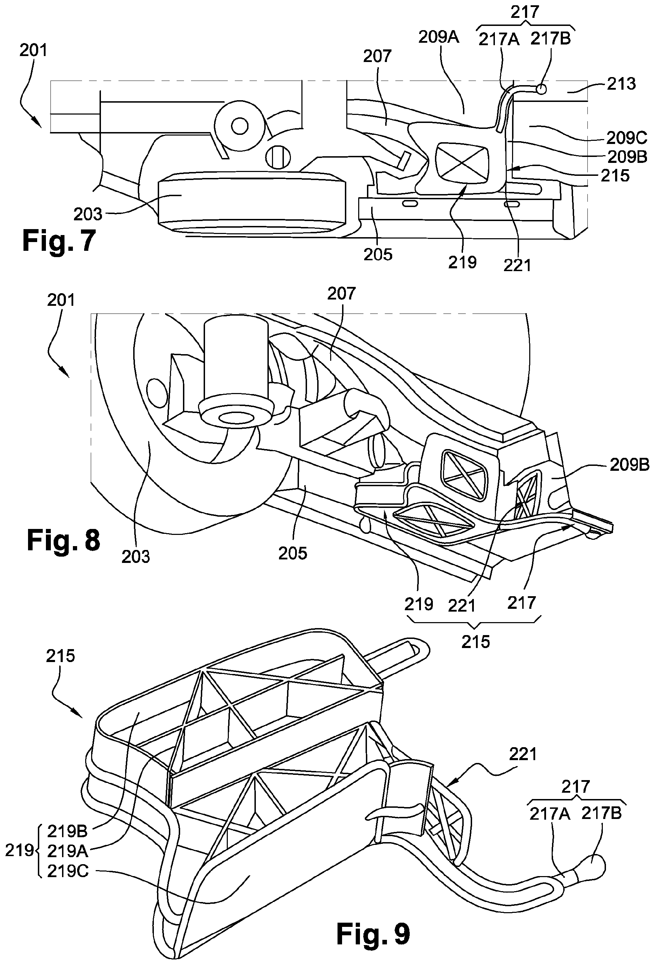

Les figures 7 à 9 décrivent également une structure arrière d'un véhicule automobile 201 avec un renfort 215 selon un deuxième mode de réalisation de l'invention. Ces figures reprennent la numérotation des figures 2 à 6 pour les éléments identiques ou similaires, la numération étant toutefois incrémentée de 100. Il est par ailleurs fait référence à la description de ces éléments en relation avec le premier mode de réalisation. Des numéros spécifiques compris entre 200 et 300 sont utilisés pour les éléments spécifiques à ce mode de réalisation. Ce renfort 215 présente la plupart des caractéristiques du renfort 115 décrit dans le premier mode de réalisation.

Une portion arrière 219 a la même disposition que la portion arrière 119 du renfort 115, elle se prolonge vers l'avant par une portion intermédiaire 221, qui s'étend verticalement pour prendre appui sur un ressaut 209B du plancher 209. Cette portion intermédiaire 221 est renforcée par des renforcements tubulaires supplémentaires. De la portion arrière 219 partent deux pattes 217A terminées par des œillets de fixation 217B et qui vont permettre de fixer le renfort 215 sur des profilés longitudinaux 213 positionnés sous le plancher 209 du véhicule. Le renfort 215 dans ce cas est conçu d'un seul tenant. Une autre particularité de ce renfort 215 est qu'il est préférentiellement réalisé dans des matériaux métalliques. La portion arrière 219 selon le deuxième mode de réalisation de l'invention peut également présenter des renforcements supplémentaires, notamment sur des bords latéraux externe 219B et interne 219C.

Les deux modes de réalisation des renforts peuvent être couplés entre eux, ou montés séparément.

## Revendications

1. Structure arrière d'un véhicule automobile (101 ; 201), ladite structure comprenant :
- un plancher (109 ; 209) avec une zone arrière (109A ; 209A) destinée à recevoir une banquette arrière, ladite zone étant surélevée en formant un ressaut (109B ; 209B) par rapport à une zone dudit plancher (109 ; 209) adjacente à l'avant ;
- deux profilés structurels arrière (107 ; 207) s'étendant longitudinalement vers l'arrière sous la zone arrière du plancher (109A ; 209A) depuis le ressaut (109B ; 209B) ;
**caractérisée en ce que** la structure (101 ; 201) comprend, en outre :
- deux renforts (115 ; 215) sur les deux profilés structurels (107; 207), respectivement ; chacun desdits renforts (115 ; 215) étant fixé au profilé (107; 207) correspondant et au plancher (109; 209), au niveau du ressaut (109B ; 209B), et configuré de manière à limiter une tendance dudit profilé (107 ; 207) à pivoter verticalement vers le haut en cas de choc à l'arrière.

2. Structure arrière (101 ; 201) selon la revendication 1, **caractérisée en ce que** chacun des renforts (115 ; 215) comprend une portion arrière (119 ; 219) s'étendant longitudinalement sous le profilé (107 ; 207) correspondant et une portion avant (117; 217) s'étendant sous la zone adjacente du plancher (109 ; 209).

3. Structure arrière (101 ; 201) selon la revendication 2, **caractérisée en ce que** pour chacun des renforts (115 ; 215), la portion avant (117 ; 217) comprend des pattes s'étendant longitudinalement depuis la portion arrière (119 ; 219) ; lesdites pattes (117A ; 217A) comprenant, chacune, au moins un œillet de fixation (117B ; 217B) par vis.

4. Structure arrière (101 ; 201) selon la revendication 3, **caractérisée en ce qu'**au moins une des pattes (117A ; 217A) de chacun des renforts (115 ; 215) est fixé à un profilé longitudinal (113 ; 213) s'étendant sous le plancher (109 ; 209).

5. Structure arrière (101 ; 201) selon l'une quelconque des revendications 2 à 4, **caractérisée en ce que** pour chacun des renforts (115 ; 215), la portion arrière (119 ; 219) s'étend verticalement le long d'une face latérale du profilé (107 ; 207) correspondant et est fixée à ladite face.

6. Structure arrière (101 ; 201) selon l'une quelconque des revendications 2 à 5, **caractérisée en ce que** chacun des renforts (115 ; 215) comprend une portion intermédiaire (121 ; 221), située entre les portions arrière (119 ; 219) et avant (117 ; 217), s'étendant verticalement le long du ressaut (109B ; 209B) de manière à pouvoir prendre appui sur ledit ressaut (109B ; 209B) en cas de pivotement vertical du profilé (107; 207) correspondant lors du choc à l'arrière.

7. Structure arrière (101 ; 201) selon l'une quelconque des revendications 2 à 6, **caractérisée en ce que** pour chacun des renforts (115 ; 215), la portion arrière (119 ; 219) comprend à un bord latéral extérieur (119B ; 219B), à une position arrière, au moins un œillet de fixation (117B ; 217B) par vis à un longeron structurel latéral (105 ; 205) du plancher (109 ; 209).

8. Structure arrière (101 ; 201) selon l'une quelconque des revendications 2 à 7, **caractérisée en ce que** pour chacun des renforts (115 ; 215), la portion arrière (119 ; 219) comprend des parois verticales formant des cavités (119A ; 219A) en contact avec le profilé (107 ; 207) correspondant et apte à se déformer en compression lors du pivotement vertical dudit profilé (107 ; 207) lors du choc à l'arrière.

9. Structure arrière (101) selon l'une quelconque des revendications 1 à 8, **caractérisée en ce que** chacun des renforts (115) comprend une structure tubulaire métallique s'étendant sur les portions avant (117) et arrière (119) ; les cavités déformables (119A), le cas échéant, étant rapportées sur ladite structure.

10. Structure arrière (201) selon l'une quelconque des revendications 1 à 8, **caractérisée en ce que** chacun des renforts (215) est une pièce métallique de fonderie formant les portions avant (217) ; arrière (219) ; intermédiaire (221), le cas échéant ; et les cavités déformables (219A), le cas échéant.

## Patentansprüche

1. Hintere Struktur eines Kraftfahrzeugs (101; 201) umfasst:
- einem Fußboden (109; 209) mit einem hinteren Bereich (109A; 209A) zur Aufnahme einer Rückbank, wobei der Bereich unter Bildung eines Vorsprungs (109B; 209B) relativ zu einem Bereich des Bodens (109; 209) nach vorn;
- zwei hintere Strukturprofile (107; 207), die sich in Längsrichtung nach hinten unter dem hinteren Bereich des Bodens (109A; 209A) vom Sprung (109B; 209B);
**dadurch gekennzeichnet, dass** die Struktur (101; 201. umfasst ferner
- zwei Verstärkung (115; 215) an beiden Strukturprofilen (107; 207. jede der Verstärkungen (115; 215) am Profil (107; 207) entsprechend dem Boden (109; 209) an der Schwelle (109B; 209B) und so konfiguriert, dass eine Neigung des Profils (107; 207) bei einem Aufprall nach hinten vertikal nach oben zu schwenken.

2. Hintere Struktur (101; 201) nach Anspruch 1, **dadurch gekennzeichnet, dass** jede der Verstärkungen (115; 215) einen hinteren Teil (119; 219) sich in Längsrichtung unter dem Profil (107; 207) und einen vorderen Teil (117; 217), die sich unter dem benachbarten Bereich des Bodens (109; (209).

3. Hintere Struktur (101; 201) nach Anspruch 2, **dadurch gekennzeichnet, dass** für jede der Verstärkungen (115; 215) der vordere Teil (117; 217) mit Laschen, die sich in Längsrichtung vom hinteren Teil (119) erstrecken; 219. die Laschen (117A; 217A) mit jeweils mindestens einer Befestigungsöse (117B; 217B) pro Schraube.

4. Hintere Struktur (101; 201) nach Anspruch 3, **dadurch gekennzeichnet, dass** mindestens eine der Laschen (117A; 217A) jeder Verstärkung (115; 215) an einem Längsprofil (113; 213) sich unter dem Boden (109; (209).

5. Hintere Struktur (101; 201) nach einem der Ansprüche 2 bis 4, **dadurch gekennzeichnet, dass** für jede der Verstärkungen (115; 215) der hintere Teil (119; 219) sich vertikal entlang einer Seitenfläche des Profils (107; 207) entspricht und an dieser Seite befestigt ist.

6. Hintere Struktur (101; 201) nach einem der Ansprüche 2 bis 5, **dadurch gekennzeichnet, dass** jede der Verstärkungen (115; 215) einen Zwischenabschnitt (121; 221) zwischen den hinteren Abschnitten (119; 219) und davor (117; 217), die sich vertikal entlang der Erhebung (109B; 209B) derart, dass er auf der Erhebung (109B; 209B) bei vertikaler Verschwenkung des Profils (107; 207) entsprechend beim Heckaufprall.

7. Hintere Struktur (101; 201) nach einem der Ansprüche 2 bis 6, **dadurch gekennzeichnet, dass** für jede der Verstärkungen (115; 215) der hintere Teil (119; 219) an einer äußeren Seitenkante (119B; 219B) in einer Rückstellung mindestens eine Befestigungsöse (117B; 217B) durch Schrauben an einem seitlichen Strukturholm (105; 205) des Bodens (109; (209).

8. Hintere Struktur (101; 201) nach einem der Ansprüche 2 bis 7, **dadurch gekennzeichnet, dass** für jede der Verstärkungen (115; 215) der hintere Teil (119; 219) mit vertikalen Wänden, die Vertiefungen (119A; 219A) in Kontakt mit dem Profil (107; 207) entsprechend und geeignet, sich bei der vertikalen Schwenkbewegung des Profils (107) unter Druck zu verformen; 207) beim Heckaufprall.

9. Hintere Struktur (101) nach einem der Ansprüche 1 bis 8, **dadurch gekennzeichnet, dass** jede der Verstärkungen (115) eine rohrförmige Metallstruktur aufweist, die sich über die vorderen (117) und hinteren (119) Abschnitte erstreckt; die verformbaren Hohlräume (119A), sofern vorhanden, auf der Struktur angebracht sind.

10. Hinterer Aufbau (201) nach einem der Ansprüche 1 bis 8, **dadurch gekennzeichnet, dass** jede der Verstärkungen (215) ein metallisches Gussstück ist, das die vorderen Abschnitte (217) bildet; hinten (219); gegebenenfalls Zwischenhändler (221); und gegebenenfalls verformbare Hohlräume (219A).

## Claims

1. Rear structure of a motor vehicle (101; 201), the said structure comprising:
- a floor (109; 209) with a rear area (109A; 209A) for the purpose of receiving a rear seat, the area being raised by forming an overpass (109B; 209B) in relation to an area of the said floor (109; 209) adjacent to the front;
- two rear structural profiles (107); 207) extending lengthwise towards the rear of the floor (109A; 209A) since the overshoot (109B; 209B);
characterized as structure (101; 201) also includes:
- two reinforcements (115; 215) on the two structural profiles (107; 207), respectively; each of the said reinforcements (115; 215) attached to the profile (107; 207) corresponding to the floor (109); 209), at the level of the spring (109B; 209B), and configured to limit a trend of the said profile (107; 207) to rotate vertically upward in the event of a rear impact.

2. Rear structure (101; 201) according to Claim 1, characterized as each of the reinforcements (115; 215) includes a rear portion (119; 219) extending lengthwise under the profile (107; 207) and one front portion (117; 217) extending below the adjacent area of the floor (109; 209).

3. Rear structure (101; 201) according to Claim 2, **characterized in that** for each of the reinforcements (115; 215), the front portion (117; 217) includes legs extending lengthwise from the rear portion (119; 219); the said legs (117A; 217A), each of which includes at least one attachment carnation (117B); 217B) per screw.

4. Rear structure (101; 201) according to Claim 3, characterized as one or more legs (117A; 217A) of each of the reinforcements (115; 215) is attached to a longitudinal profile (113; 213) extending below the floor (109; 209).

5. Rear structure (101; 201) according to any of the claims 2 to 4, **characterized in that** for each of the reinforcements (115; 215), the rear portion (119; 219) extends vertically along a lateral face of the profile (107; 207) corresponding and is fixed to the said face.

6. Rear structure (101; 201) according to any of the claims 2 to 5, **characterized by** that each of the reinforcements (115; 215) includes an intermediate portion (121; 221), located between the rear portions (119; 219) and before (117; 217), extending vertically along the spring (109B; 209B) in such a way as to be able to rely on the said jump (109B; 209B) in case of vertical rotation of the profile (107; 207) corresponding during the rear impact.

7. Rear structure (101; 201) according to any of Claims 2 to 6, characterized as for each of the reinforcements (115; 215), the rear portion (119; 219) includes on an outer side edge (119B; 219B), at a rear position, at least one attachment eye (117B); 217B) per screw to a lateral structural longeron (105; 205) of the floor (109; 209).

8. Rear structure (101; 201) according to any of the claims 2 to 7, **characterized in that** for each of the reinforcements (115; 215), the rear portion (119; 219) includes vertical walls forming cavities (119A; 219A) in contact with the profile (107; 207) corresponding to and capable of deforming in compression when the profile is rotated vertically (107); 207) during the rear impact.

9. Rear structure (101) according to any of Claims 1 to 8, characterized that each of the reinforcements (115) includes a metal tubular structure extending over the front (117) and rear (119) portions; the deformable cavities (119A), if any, being reported on that structure.

10. Rear structure (201) according to any of Claims 1 to 8, **characterized by** that each of the reinforcements (215) is a metal foundry piece forming the front portions (217); rear (219); intermediate (221), if applicable; and deformable cavities (219A), if applicable.
